# EUROPEAN PATENT APPLICATION

(11) **EP 4 296 292 A1**
(43) Date of publication of application: **27.12.2023**
(21) Application number: 22763315.3
(22) Date of filing: 02.03.2022
(51) Int. Cl.: C08G 61/12, C08J 5/18, H01M 8/10, H01M 8/1039, C25B 13/08

(54) **POLYMER AND METHOD FOR PRODUCING SAME, SEPARATION MEMBRANE, ELECTROLYTE MEMBRANE, FUEL CELL, WATER ELECTROLYSIS, AND ELECTROLYSIS TECHNIQUE**

(30) Priority: 05.03.2021 JP 2021035443
(71) Applicant: Tokyo Institute of Technology, Tokyo 152-8550 (JP)
(72) Inventor: YAMAGUCHI, Takeo, Tokyo 152-8550 (JP); MIYANISHI, Shoji, Tokyo 152-8550 (JP)
(74) Representative: Opilex
(86) International application number: PCT/JP2022/008810
(87) International publication number: WO 2022/186261

(57) **Abstract**

To provide: a polymer having excellent mechanical strength and tensile strength; a simple method for producing the polymer; a separation membrane and an electrolyte membrane produced by using the polymer and having excellent chemical durability and mechanical strength; a fuel cell, water electrolysis, and an electrolysis technique in which the electrolyte membrane is used. The polymer has a repeating unit represented by the following Formula (1) and a repeating unit represented by the following Formula (2). 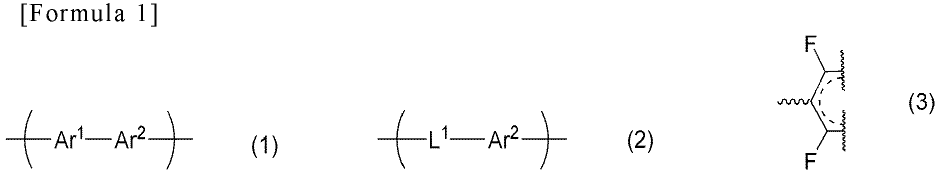 In Formulas (1) and (2), Ar¹ is a group containing an aromatic ring. Ar² is each independently a group having a structure represented by the above Formula (3) at both ends. L¹ is an organic group in which an angle formed between two bonding hands of the L¹ is 45 to 90 degrees. When there is more than one Ar¹, Ar², or L¹, the more than one Ar¹, Ar² or L¹ may be the same or different from each other.

## Description

### Technical Field

The present invention relates to polymers and methods for producing the same, separation membranes, electrolyte membranes, fuel cells, water electrolysis, and electrolysis techniques.

### Background Art

Electrolyte membranes and electrolyte ionomers are used in various fuel cells, such as polymer electrolyte fuel cells and solid alkaline fuel cells, and in various electrolysis techniques, such as water electrolysis. The electrolyte membranes are required to have excellent ion conductivity as well as chemical and mechanical durability to withstand long-term use. In addition, the electrolyte ionomers are required to have high chemical durability and high fuel gas permeability.

As a proton-conducting material for electrolyte membranes with high swelling resistance and a high density of ion-exchange groups for high proton conductivity, the present inventors have disclosed, in Patent Literature 1, a proton-conducting material including repeating units having a specific hydrophilic moiety and a specific hydrophobic moiety and containing a specific cyclic compound in at least one of the hydrophilic moiety and the hydrophobic moiety. The proton-conducting material has a structure in which the hydrophilic moiety and the hydrophobic moiety are bonded via an ether bond.

In addition, as an anion-conductive polymer for an electrolyte membrane having excellent chemical durability and excellent solubility in a solvent, the present inventors have disclosed, in Patent Literature 2, a polymer having a structure in which a divalent aromatic group having an ionic functional group and a spirobifluorene skeleton are alternately repeated.

### Citation List

### Patent Literature

Patent Literature 1: Japanese Unexamined Patent Application Publication No. 2016-44242
Patent Literature 2: Japanese Unexamined Patent Application Publication No. 2018-135487

### Summary of Invention

### Technical Problem

The proton-conducting material described in Patent Literature 1 may degrade under alkaline environment due to cleavage of the ether bond in the main chain, leading to a demand for the development of materials with better chemical durability.

In addition, the anion-conductive polymer described in Patent Literature 2 has excellent chemical durability, but requires multiple synthesis steps for production, leading to a demand for the development of more productive materials for electrolyte membranes.
Furthermore, many polymers for electrolyte membranes have relatively small molecular weights (e.g., a weight average molecular weight of less than 10,000), and thus their membrane formability and mechanical strength of the fabricated membranes are often inferior.

The present invention is intended to provide a polymer with excellent mechanical strength, mechanical flexibility, and gas permeability; a simple method for producing the polymer; a separation membrane, an electrolyte membrane, and an electrolyte ionomer having excellent chemical durability and mechanical strength and produced by using such a polymer; and a fuel cell, water electrolysis, and an electrolysis technique in which such an electrolyte membranes or an electrolyte ionomer is used.

### Solution to Problem

The polymer according to the present invention has a repeating unit represented by the following Formula (1) and a repeating unit represented by the following Formula (2).

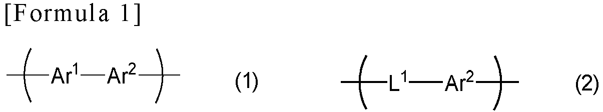

In Formula (1) and Formula (2),
Ar¹ is a group containing an aromatic ring,
Ar² is each independently a group having a structure represented by the following Formula (3) at both ends, and
L¹ is an organic group in which an angle formed between two bonding hands of the L¹ is 45 to 90 degrees, and in which
when there is more than one Ar¹, Ar², or L¹, Ar¹, the more than one Ar¹, Ar² or L¹ may be the same or different from each other.

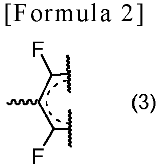

In one embodiment of the polymer, L¹ is a group represented by any of the following Formulas (L1) to (L3).

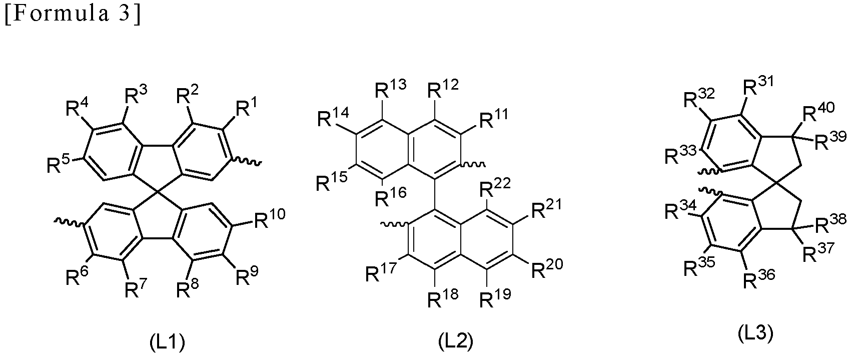

In Formulas (L1) to (L3),
R¹ to R¹⁰ are each independently a hydrogen atom, a C1-6 alkyl group optionally having a substituent, a phenyl group optionally having a substituent, or R¹ and R², R² and R³, R³ and R⁴, R⁴ and R⁵, R⁶ and R⁷, R⁷ and R⁸, R⁸ and R⁹, or R⁹ and R¹⁰ are optionally linked to form a ring structure;
R¹¹ to R²² are each independently a hydrogen atom, a C1-6 alkyl group optionally having a substituent, a phenyl group optionally having a substituent, or R¹¹ and R¹², R¹² and R¹³, R¹³ and R¹⁴, R¹⁴ and R¹⁵, R¹⁵ and R¹⁶, R¹⁷ and R¹⁸, R¹⁸ and R¹⁹, R¹⁹ and R²⁰, R²⁰ and R²¹, or R²¹ and R²² are optionally linked to form a ring structure; and
R³¹ to R⁴⁰ are each independently a hydrogen atom, a C1-6 alkyl group optionally having a substituent, a phenyl group optionally having a substituent, or R³¹ and R³², R¹² and R³³, R³⁴ and R³⁵, R³⁵ and R³⁶, R³⁶ and R³⁷, or R⁴⁰ and R³¹ are optionally linked to form a ring structure.

In one embodiment of the polymer, the Ar² is a group represented by any of the following Formulas (b-1) to (b-9).

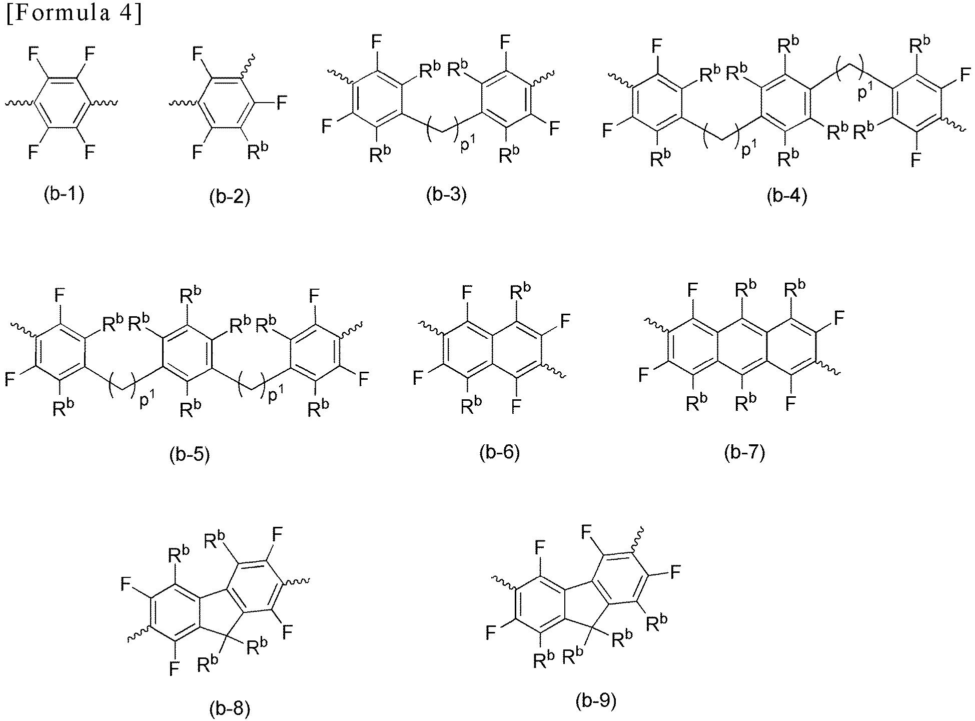

In Formulas (b-1) to (b-9),
R^{b} is each independently a hydrogen atom, a halogen atom, or an organic group; p¹ is each independently an integer of 0 to 12; and when there is more than one R^{b} or p¹, the more than one R^{b} or p¹ may be the same or different from each other.

In one embodiment of the polymer, the Ar² is a group represented by any of the following Formulas (b-10) to (b-14).

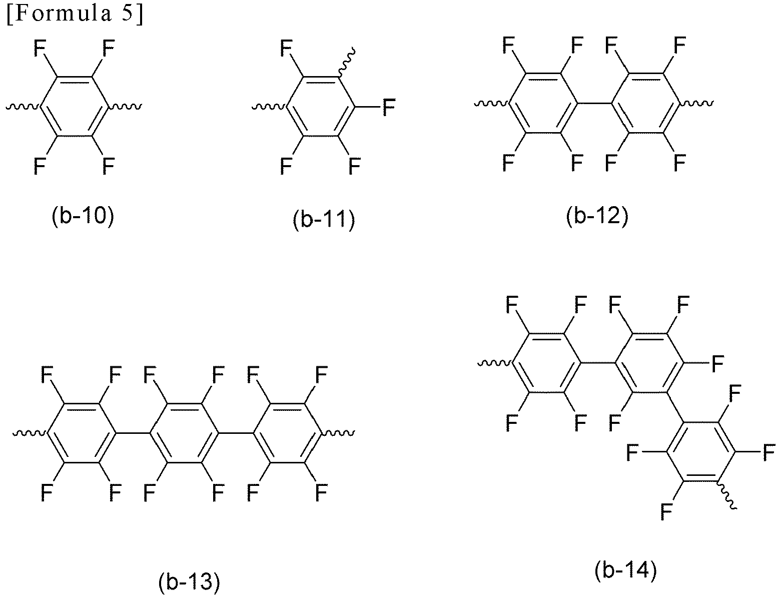

In one embodiment of the polymer, the Ar¹ is a group represented by any of the following Formulas (a-1) to (a-9).

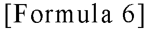

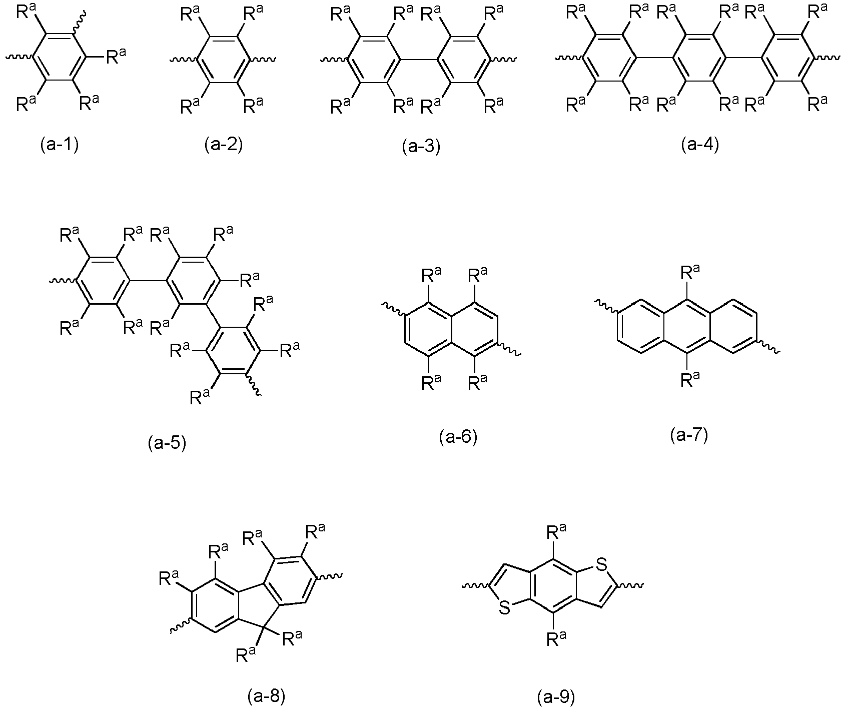

In Formulas (a-1) to (a-9),
R^{a} is each independently a hydrogen atom or a hydrocarbon group optionally having a substituent, and the more than one R^{a} may be the same or different from each other.

In one embodiment of the polymer, the molar ratio between the repeating unit represented by the Formula (1) and the repeating unit represented by the Formula (2) is 95 : 5 to 50 : 50.

In one embodiment of the polymer, the Ar¹ has an ion exchange group.

In one embodiment of the polymer, the ion exchange group is a sulfonic acid group, phosphoric acid group, carboxylic acid group, quaternary ammonium group, or imidazolium group.

A method for producing a polymer according to the present invention includes a step of reacting a compound represented by the following Formula (5), a compound represented by the following Formula (6), and a compound represented by the following Formula (7).
[Formula 7]

X¹-Ar¹-X¹ (5)

X¹-L¹-X¹ (6)

H-Ar²-H (7)

In Formulas (5) to (7),
Ar¹ is a group containing an aromatic ring,
Ar² is a group having a structure represented by the following Formula (3) at both ends,
L¹ is an organic group in which an angle formed between two bonding hands of the L¹ is 45 to 90 degrees, and
X¹ is each independently Br or I, and more than one X¹ may be the same or different from each other.

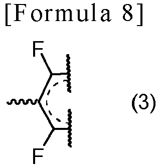

The present invention provides a separation membrane and an electrolyte membrane each including the polymer according to the present invention.

The present invention also provides a fuel cell, water electrolysis, and an electrolysis technique each including the electrolyte membrane according to the present invention.

### Advantageous Effects of Invention

According to the present invention, provided are polymers with excellent mechanical strength, mechanical flexibility, and gas permeability; simple methods for producing the polymers; separation membranes, electrolyte membranes, and electrolyte ionomers with excellent chemical durability and mechanical strength by using such polymers; and fuel cells, water electrolysis, and electrolysis technique involving use of such electrolyte membranes or electrolyte ionomers.

### Brief Description of Drawings

Fig. 1 is a schematic diagram illustrating the synthesis route of the polymers of Examples;
Fig. 2 is another schematic diagram illustrating the synthesis route of the polymers of Examples;
Fig. 3 is a graphic diagram illustrating the measurement results of the mechanical strength of the membranes;
Fig. 4 is another graphic diagram illustrating the measurement results of the mechanical strength of the membranes;
Fig. 5 is a graphic diagram illustrating the measurement results of the gas permeability of the membranes;
Fig. 6 is another graphic diagram illustrating the measurement results of the gas permeability of the membranes;
Fig. 7 is the ¹H-NMR spectra of PFTN-C₆-SBF(0.1) and PFTN-C₆-SBF(0.2);
Fig. 8 is the ¹H-NMR spectra of PFTN-C₈-SBF (0.1) and PFTN-C₈-SBF (0.2);
Fig. 9 is the ¹H-NMR spectra of PFTN-C₁₀-SBF (0.1) and PFTN-C₁₀-SBF (0.2);
Fig. 10 is the ¹H-NMR spectrum of PFTS-C₆-SBF(0.1); and

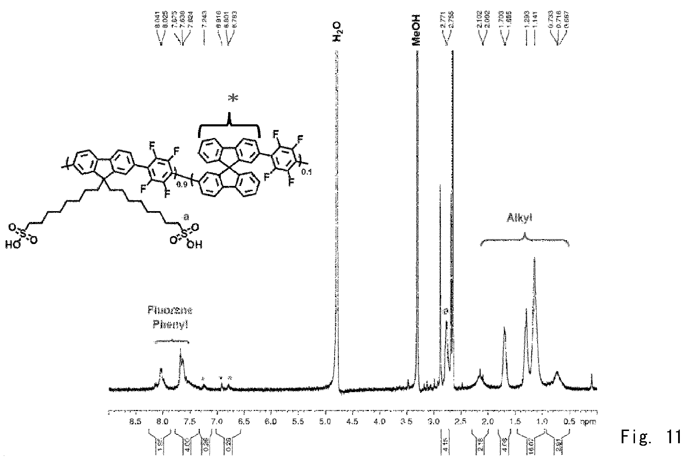

Fig. 11 is the ¹H-NMR spectrum of PFTS-C₈-SBF(0.1).

### Description of Embodiments

Hereinafter, a detailed description will be made for the polymer and method for producing the same, separation membrane, electrolyte membrane, fuel cell, water electrolysis, and electrolysis technique according to the present invention in this order.

The term "polymer(s)" as used herein encompasses "copolymer(s)," unless otherwise specified.

The term "ion exchange group(s)" as used herein refers to a functional group(s) having dissociation properties and capable of ion exchange.

The symbol "-" indicating a numerical range as used herein means that the numerical values described before and after it are included as the lower and upper limits.

As used herein, the "repeating unit represented by Formula (1)" may be referred to as "structural unit (1)". The same also applies to repeating units represented by other formulas.

As used herein, the "compound represented by Formula (5)" may be referred to as "compound (5)." The same also applies to compounds, substituents and the like represented by other formulas.

As used herein, "R¹ to R¹⁰" represent "R¹, R², R³, R⁴, R⁵, R⁶, R⁷, R⁸, R⁹, and R¹⁰." The same also applies to other signs and the like.

As used herein, "any of Formulas (L1) to (L3)" represents "any of Formula (L1), Formula (L2) or Formula (L3)". The same also applies to other formula numbers and the like.

### 1. Polymer

The polymer according to the present invention (hereinafter also referred to as the polymer) has a repeating unit represented by the following Formula (1) and a repeating unit represented by the following Formula (2).

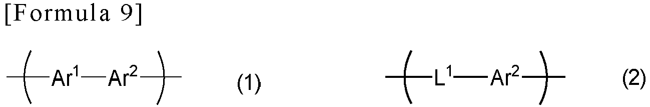

In Formula (1) and Formula (2),
Ar¹ is a group containing an aromatic ring,
Ar² is each independently a group having a structure represented by the following Formula (3) at both ends, and
L¹ is an organic group in which an angle formed between two bonding hands of the L¹ is 45 to 90 degrees, and in which
when there is more than one Ar¹, Ar² or L¹, the more than one Ar¹, Ar² or L¹ may be the same or different from each other.

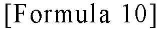

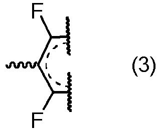

The polymer has one or more of the structural units (1) and one or more of the structural units (2), and is a linear polymer in which Ar¹ or L¹ and Ar² are alternately arranged.

The polymer has excellent chemical durability in the presence of alkali and radical because of no ether bond or the like in its main chain.

The polymer has L¹ in the main chain. L¹ is an organic group having a twisted structure with an angle of 45 to 90 degrees formed between the bonding hands to two adjacent Ar². As the polymer has L¹, its entire main chain backbone has a three-dimensionally bent structure. Thus, the polymer has low linearity in spite of being a linear polymer, and the entanglement of multiple polymers may increase during, for example, membrane formation so that it can contribute to an improved mechanical strength. In addition, the inclusion of L¹ in the polymer may improve the elongation rate of the polymer in tension, resulting in higher mechanical flexibility. Furthermore, a membrane containing the polymer may be formed with microscopic pores due to the bending structure of the polymer. As a result, the membrane containing the polymer also has excellent gas permeability. Further, for example, introducing an ion-exchange group into Ar¹ can make the polymer suitable for applications to electrolyte membranes and electrolyte ionomers.

The details of each constituent of the polymer will be described below.

L¹ is an organic group in which an angle formed between bonding hands to two adjacent Ar² is 45 to 90 degrees. The angle of 45 to 90 degrees between the bonding hands makes it possible to obtain a membrane having excellent mechanical strength and gas permeability. In view of mechanical strength and gas permeability, the angle formed is preferably 60 to 90 degrees, more preferably 75 to 90 degrees. Note that, in the present invention, the angle formed represents a right angle or an acute angle. The angle formed can be measured by X-ray structural analysis of the polymer. Alternatively, it may be obtained from the X-ray structural analysis of the starting material Compound (6).

In view of excellent chemical durability, mechanical strength, and gas permeability, L¹ is preferably a group represented by any of the following Formulas (L1) to (L3).

The group (L1) and group (L3) each contain a twist around the spiro atom. In group (L2), a twist is centered on the single bond connecting the two naphthyl groups.

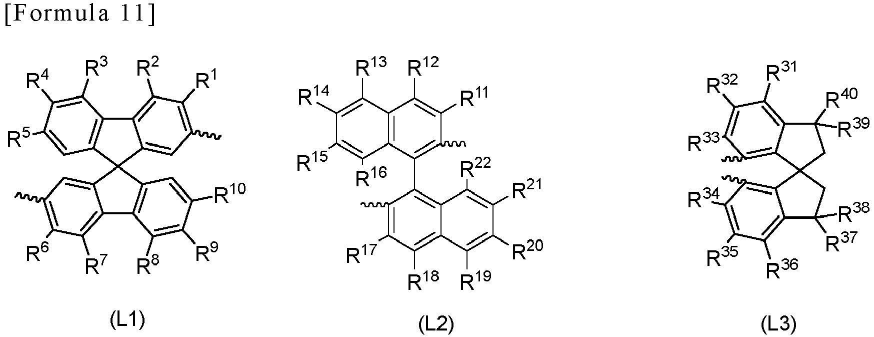

In Formulas (L1) to (L3),
R¹ to R¹⁰ are each independently a hydrogen atom, a C1-6 alkyl group optionally having a substituent, a phenyl group optionally having a substituent, or R¹ and R², R² and R³, R³ and R⁴, R⁴ and R⁵, R⁶ and R⁷, R⁷ and R⁸, R⁸ and R⁹, or R⁹ and R¹⁰ are optionally linked to form a ring structure;
R¹¹ to R²² are each independently a hydrogen atom, a C1-6 alkyl group optionally having a substituent, a phenyl group optionally having a substituent, or R¹¹ and R¹², R¹² and R¹³, R¹³ and R¹⁴, R¹⁴ and R¹⁵, R¹⁵ and R¹⁶, R¹⁷ and R¹⁸, R¹⁸ and R¹⁹, R¹⁹ and R²⁰, R²⁰ and R²¹, or R²¹ and R²² are optionally linked to form a ring structure; and
R³¹ to R⁴⁰ are each independently a hydrogen atom, a C1-6 alkyl group optionally having a substituent, a phenyl group optionally having a substituent, or R³¹ and R³², R³² and R³³, R³⁴ and R³⁵, R³⁵ and R³⁶, R³⁶ and R³⁷, or R⁴⁰ and R³¹ are optionally linked to form a ring structure.

Note that the wavy line in the formula represents the bonding hand that binds to Ar².

Examples of the alkyl groups for R¹ to R¹⁰, R¹¹ to R²² and R³¹ to R⁴⁰ include linear or branched alkyl groups, and specifically include a methyl group, an ethyl group, a propyl group, and a tert-butyl group. Examples of the substituent that the alkyl groups may have include halogen atom and a phenyl group. Examples of the substituent that phenyl groups in R¹ to R¹⁰ may have include C1-6 alkyl groups.

The expression that R¹ and R² are linked to form a ring structure means that R¹ and R² form a ring via two carbon atoms in Formula (L1). Specific examples thereof include the following Formula (L1-1) and Formula (L1-2). The same also applies to other combinations.

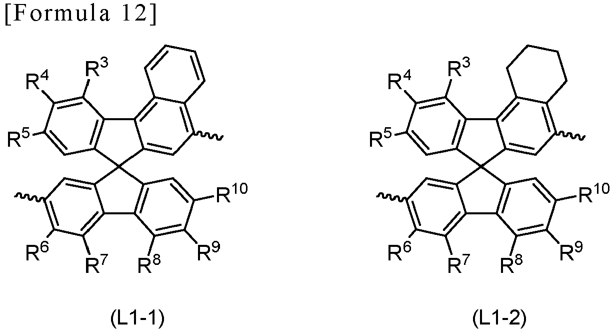

Ar¹ is a group containing an aromatic ring. Since Ar¹ contains an aromatic ring, the polymer is excellent in mechanical strength and chemical durability.

The aromatic ring in Ar¹ preferably serves as part of the main chain of the polymer. The aromatic ring may be a benzene ring or a condensed ring, such as a naphthalene ring or an anthracene ring, or may be a heterocyclic ring containing an oxygen atom (O), a nitrogen atom (N), or a sulfur atom (S) (for example, thiophene), or a structure in which these rings are linked via one or more single bonds or linking groups. Examples of the structure in which multiple rings are linked by one or more single bonds include biphenyl and terphenyl. Examples of the linking group include linear or branched alkylene groups, cyclic alkylene groups, and groups composed of combinations thereof.

The aromatic ring in Ar¹ may have various substituents. Various functionalities can be imparted to the polymer by having a substituent. Examples of the substituent include a C1-6 alkyl group optionally having a substituent, a phenyl group optionally having a substituent, a halogen atom, and an ion exchange group.

Specific examples of the above hydrocarbon group include a methyl group, an ethyl group, a propyl group, and a tert-butyl group. Examples of the substituent that the alkyl group may have include halogen atom and a phenyl group.

For the use of the polymer as an electrolyte membrane or an electrolyte ionomer, Ar¹ preferably has an ion exchange group.

For imparting proton conductivity to the polymer, the ion exchange group is preferably an acidic group, more preferably a sulfonic acid group (-SO₃H group), a phosphoric acid group (-H₂PO₄ group), or a carboxylic acid group (-COOH group), and still more preferably a sulfonic acid group. H in the acidic group may be replaced with an alkali metal ion, an alkaline earth metal ion, or the like.

For imparting anion conductivity to the polymer, the ion exchange group is preferably a quaternary ammonium group or an imidazolium group, and more preferably a quaternary ammonium group. Further, in view of alkali durability, the quaternary ammonium group is preferably a quaternary alkylammonium group. The quaternary alkylammonium group encompasses those in which alkyl groups bonded to nitrogen atoms are bonded to each other to form a ring structure, such as an azaadamantyl group and a quinuclidinium group.

Preferred specific examples of the quaternary ammonium group include groups represented by the following Formulas (e-1) to (e-3). Further, preferred specific examples of the imidazolium group include groups represented by the following Formula (f-1), and furthermore, groups represented by the following Formula (f-2) or the following Formula (f-3) are more preferred.

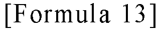

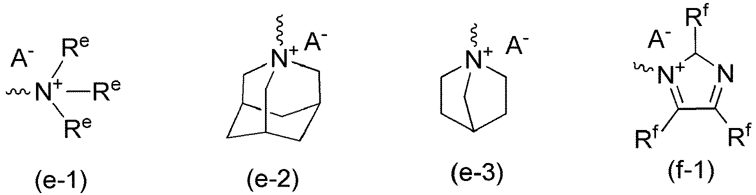

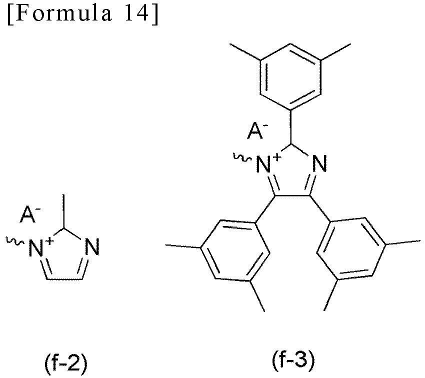

In the formula, R^{e} is each independently a linear, branched, or cyclic alkyl group having 1 to 6 carbons; R^{f} is each independently a hydrogen atom, a linear or branched alkyl group having 1 to 4 carbons, or an aromatic group optionally having one or more substituent groups; and A⁻ is a monovalent or divalent or higher anion. When there is more than one R^{e} or R^{f}, the more than one R^{e} or R^{f} may be the same or different from each other. Note that the wavy line in the formula indicates the bonding hand that binds to the aromatic ring side in Ar¹.

Specific examples of the alkyl group for the above R^{e} include a methyl group, an ethyl group, a propyl group, a butyl group, a pentyl group, a hexyl group, and a cyclohexyl group. Specific examples of the alkyl group for the above R^{f} include a methyl group, an ethyl group, a propyl group, and a butyl group. Examples of the aromatic group for R^{f} include a phenyl group, and examples of a substituent for the phenyl group include a C1-6 alkyl group.

As the above A⁻, an inorganic anion is preferred, such as chloride ion (Cl⁻), bromide ion (Br⁻), iodide ion (I⁻), hydrogen carbonate ion (HCO₃⁻), carbonate ion (CO₃²⁻), hydroxide ion (OH⁻).

The above ion-exchange group may be directly bonded to the aromatic ring side in Ar¹, or may be bonded via an organic group. As the organic group, a linear or branched alkylene group is preferred, and a linear alkylene group is particularly preferred. The number of carbon atoms in the alkylene group can be appropriately adjusted according to the physical properties required for the polymer. For example, by setting the number of carbon atoms in the alkylene group to 20 or less, preferably 16 or less, more preferably 12 or less, the capacity of the ion exchange group in the polymer increases. On the other hand, by setting the number of carbon atoms in the alkylene group to 2 or more, preferably 4 or more, more preferably 6 or more, the polymer having excellent solubility and swelling resistance can be obtained.

In view of excellent mechanical strength, chemical durability, and membrane formability of the polymer, the Ar¹ is preferably a group represented by any of the following Formulas (a-1) to (a-9).

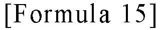

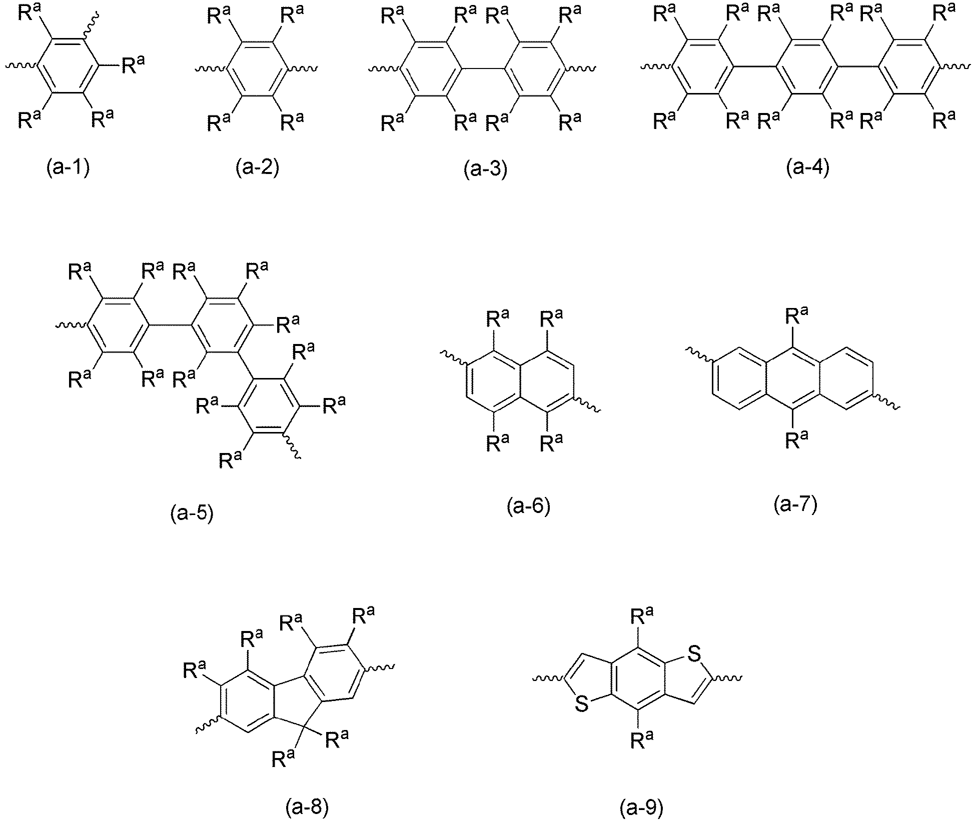

In Formulas (a-1) to (a-9),
R^{a} is each independently a hydrogen atom, a hydrocarbon group optionally having a substituent (including an ion-exchange group), and more than one R^{a} may be the same or different from each other.

Note that the wavy line indicates the bonding hand that binds to Ar².

The above Ar² is a group having the structure represented by the following Formula (3) at both ends. In other words, the Ar² is a divalent group containing an aromatic ring having a fluorine atom at the α-position of the carbon atom at the end. Here, the end of Ar² refers to the carbon atom bonded to Ar¹ or L¹. Having the partial structure (3) allows the polymer to be easily made as well as being excellent in radical resistance and alkali resistance.

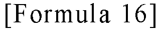

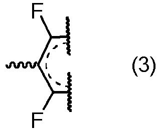

Note that the wavy line in the formula indicates the bonding hand that binds to Ar¹ or L¹, and the carbon atoms in the formula are aromatic.

The aromatic ring having the partial structure (3) serves as part of the main chain of the polymer. Instead of the benzene ring, the aromatic ring may be a condensed ring, such as a naphthalene ring or an anthracene ring, or the aromatic ring may be a heterocyclic ring containing an oxygen atom (O), a nitrogen atom (N), or a sulfur atom (S). Furthermore, the aromatic ring may have a substituent, and furthermore, its structure may have multiple rings linked via a single bond or a linking group (hereinafter also referred to as a chain polycyclic hydrocarbon). Examples of the structures in which multiple rings are linked by one or more single bonds include biphenyl and terphenyl. Examples of the substituent on the aromatic ring include halogeno groups and organic groups (e.g., a linear or branched C1-20 alkyl group optionally having a substituent). Examples of the linking group include linear or branched alkylene groups, cyclic alkylene groups, and groups of combinations thereof.

Ar² may have two partial structures (3) in one ring structure (e.g., a benzene ring), for example, as in Formula (b-1) below, or one C-F bond may contributes to forming two partial structures (3) as in Formula (b-2) below. In the case of the chain polycyclic hydrocarbon, each of the two ring structures of the chain polycyclic hydrocarbon has one partial structure (3), and these rings may be linked directly or via the above linking group; or alternatively, one of the multiple ring structures may have two partial structures (3).

In the polymer, the Ar² is preferably a group represented by any of the following Formulas (b-1) to (b-9) in view of excellent mechanical strength, chemical durability, and membrane formability.

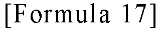

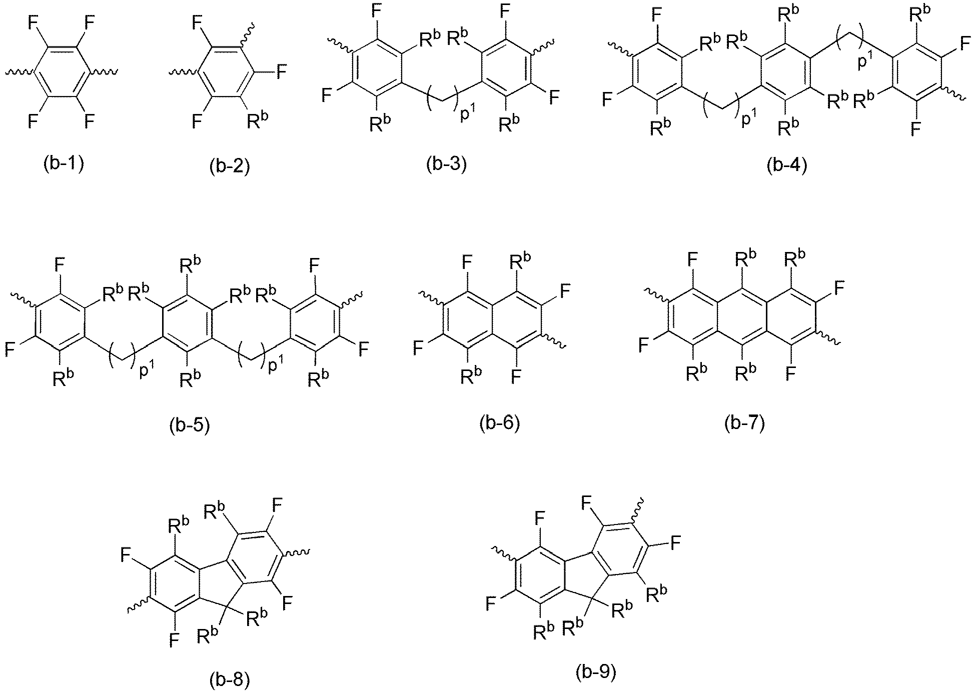

In Formulas (b-1) to (b-9),
R^{b} is each independently a hydrogen atom, a halogen atom, or an organic group; p¹ is each independently an integer of 0 to 12; and when there is more than one R^{b} or p¹, the more than one R^{b} or p¹ may be the same or different from each other.

Examples of the halogen atom for the R^{b} include a fluorine atom, a chlorine atom, a bromine atom, and an iodine atom. Among them, a fluorine atom is preferred in view of ease of production and the others.

Further, examples of the organic group for the R^{b} include a linear or branched C1-20 alkyl group optionally having a substituent (e.g., a halogen atom). In the above Formulas (b-3) to (b-5), when p¹ is 0, multiple benzene rings are directly bonded by single bonds, each resulting in a biphenyl structure or a terphenyl structure.

In view of the mechanical strength, chemical durability, membrane formability, and ease of production of the polymer, the above Ar² is more preferably a group represented by any of the following Formulas (b-10) to (b-14).

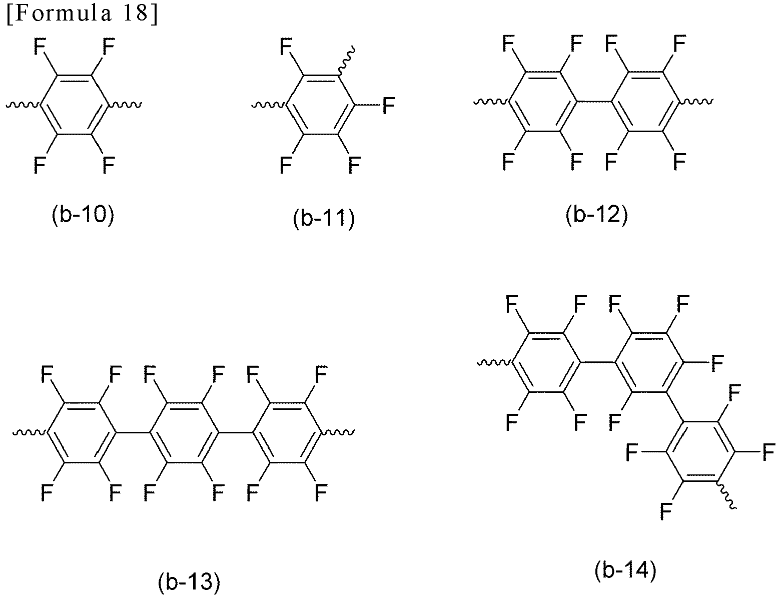

In the present polymer, the linking order of the structural unit (1) and the structural unit (2) is not particularly limited. It may be a random copolymer, an alternating copolymer in which the structural unit (1) and the structural unit (2) are arranged alternately, a block copolymer having a block of the structural unit (1) and a block of the structural unit (2), or a partial combination of these. Random copolymers are preferred in view of ease of production.

The ratio of the structural unit (1) and the structural unit (2) is not particularly limited, and may be appropriately adjusted according to, for example, the application of the polymer. In view of improving the mechanical strength and tensile strength of the polymer, the molar ratio of the structural unit (1) and the structural unit (2) is preferably 95 : 5 to 50 : 50, more preferably 90 : 10 to 70 : 30.

The weight average molecular weight of the polymer is not particularly limited, and may be appropriately adjusted according to, for example, the application of the polymer. For example, it can be in the range of 10,000 to 1,000,000, preferably 30,000 or more, more preferably 100,000 or more, in view of membrane formability and membrane strength. The weight average molecular weight is a polystyrene equivalent value measured by GPC (gel permeation chromatography).

### 2. Polymer production method

The method for producing a polymer according to the present invention (hereinafter also referred to as the production method) is a suitable method for producing the polymer, and
the method includes the step of reacting a compound represented by the following Formula (5), a compound represented by the following Formula (6), and a compound represented by the following Formula (7).
[Formula 19]

X¹-Ar¹-X¹ (5)

X¹-L¹-X¹ (6)

H-Ar²-H (7)

In Formulas (5) to (7),
X¹ is each independently Br or I, and more than one X¹s may be the same or different from each other,
Ar¹, Ar², and L¹ are the same as those described in the above section of the polymer.

In this production method, a polymerization reaction can be easily carried out because of the excellent reactivity of X¹ of compounds (5) and (6) with the hydrogen atom of compound (7). For example, even a polymer with high molecular weight (e.g., weight average molecular weight of 100,000 or more) can be synthesized relatively easily.

Compound (7) has excellent reactivity as it contains an aromatic ring (the partial structure (3)) having a fluoro group (-F) at the α-position of a hydrogen atom serving as a reaction point in the C-H activation reaction.

In this production method, X¹ of each of compounds (5) and (6) is reacted with the hydrogen atom of compound (7) by a C-H activation reaction. The C-H activation reaction is performed by, for example, reacting compounds (5) and (6) with compound (7) in a solvent in the presence of a Pd complex, a ligand, a carboxylic acid (RCO₂H) and a base. Various Pd complexes, ligands, carboxylic acids, bases, and solvents can be used in the C-H activation reaction step. Among them, the use of each of Pd₂(dba)₃-CHCl₃, P(o-C₆H₄-OMe)₃, pivalic acid (PivOH), Cs₂CO₃, and dryTHF is particularly preferred. Here, dba means dibenzylideneacetone. Here, the reaction time and reaction temperature in the C-H activation reaction step can also be appropriately set, and may be, for example, 1 to 72 hours and 80 to 110°C, respectively.

For the polymer having an ion-exchange group in Ar¹, Ar¹ preferably used in the above compound (5) as a starting material is one having a functional group that can be converted to an ion-exchange group. Examples of the functional groups that can be converted to ion-exchange groups include a halogen atom, a sulfonate ester group (-SO₃R⁴¹ group), a phosphate ester group (-R⁴¹₂PO₄ group), a carboxylate ester group (-COOR⁴¹ group), an imidazole group, and an amino group (-NR'R").

Here, R⁴¹ may be each independently an alkyl group optionally having a substituent, or the like, and specific examples thereof include a methyl group, an ethyl group, and a propyl group.

Examples of R' and R" include, each independently, a hydrogen atom and an alkyl group optionally having a substituent.

When compound (5) having a functional group convertible to an ion-exchange group is used, the production method may include a step of converting the functional group to an ion-exchange group after the synthesis of the polymer. The method for introducing the ion-exchange group can be appropriately selected according to the functional group convertible to the ion-exchange group. For example, if the functional groups that can be converted to ion-exchange groups are sulfonate ester groups, phosphate ester groups, and carboxylate ester groups, these groups can be converted to ion-exchange groups (sulfonic acid groups, phosphoric acid groups, and carboxylic acid groups) by hydrolysis.

Compounds (5), (6), and (7) may each be synthesized by known methods or commercial products thereof may be used.

As described above, the production method according to the present invention can easily produce the above polymers having excellent mechanical strength and tensile strength in a small number of synthesis steps.

### 3. Separation membrane

The characteristic feature of the separation membrane according to the present invention is to contain the polymer described above. The separation membrane obtained from the polymer is excellent in mechanical strength, chemical durability, and tensile strength, and is also excellent in gas (e.g., hydrogen and oxygen) permeability. Many conventional polymers with a high ratio of aromatic rings have low gas permeability. It is presumed that microscopic pores are formed in the membrane containing the above-described polymer due to the bending of the polymer. As a result, the membrane containing the polymer has excellent gas permeability, especially hydrogen permeability.

As a method for producing a separation membrane, a general membrane forming method can be applied. For example, a separation membrane can be obtained by dissolving the polymer in a solvent capable of dissolving it (e.g., dimethyl sulfoxide, alcohol or alcohol aqueous solution) to prepare a polymer solution, making the solution into a coating film using a known coating means, and drying it.

### 4. Electrolyte membrane

The characteristic feature of the electrolyte membrane according to the present invention is to use the polymer in which Ar¹ has an ion exchange group. The electrolyte membrane including the polymer is excellent in chemical durability, ionic conductivity, and membrane mechanical strength, and can be suitably used as an electrolyte membrane for a fuel cell, water electrolysis, and an electrolysis technique. In addition, the polymer having an ion exchange group can be easily dissolved in a solvent (e.g., alcohol or a mixed solvent of alcohol and water) normally used in the production of the membrane electrode assembly (MEA) of a fuel cell, and also has excellent gas permeability. Therefore, the polymer can also be used as an electrolyte ionomer in these batteries and electrolytic devices.

The polymer has a high ionic functional group density (IEC) and exhibits very high ionic conductivity. The IEC of the polymer is preferably 0.5 meq·g⁻¹ or more and 4.0 meq·g⁻¹ or less. The ionic conductivity of the polymer preferably has an ionic conductivity of 100 mS/cm or higher at 80°C and saturated humidity. The polymer can exhibit high ionic conductivity even at reduced relative humidity. The polymer exhibits a high ionic conductivity of 10 mS/cm or more, for example, even at 80°C and 60% relative humidity. The polymer has good swelling resistance, whereas general polymers with high ionic conductivity have a high water content and often swells remarkably in a water-containing state.

The same method as for the separation membrane described above can be applied to the production of separation membranes. For example, an electrolyte membrane can be obtained by dissolving the polymer in a solvent capable of dissolving it (e.g., dimethyl sulfoxide, alcohol, or an alcohol aqueous solution) to prepare a polymer solution, making the solution into a coating film using a known coating means, and drying it.

A proton-conducting electrolyte membrane can be obtained by converting the ion exchange group in the polymer into an acidic group. An anion-conducting electrolyte membrane can be obtained by converting the ion exchange group into a basic group, such as the quaternary ammonium group,

### 5. Fuel cell

The characteristic feature of the fuel cell according to the present invention is to have the above electrolyte membrane or electrolyte ionomer. The electrolyte membrane and electrolyte ionomer of the present invention can be suitably used for both solid alkaline fuel cells and polymer electrolyte fuel cells.

In a case where the electrolyte membrane is applied to a solid alkaline fuel cell, an anion conductive electrolyte membrane is used as the electrolyte membrane. The configuration of the solid alkaline fuel cell may be a conventionally known configuration.

For example, a membrane electrode assembly is formed by arranging a cathode on one side of the electrolyte membrane and an anode on the other side thereof; then, oxygen is supplied to the cathode and fuel is supplied to the anode; subsequently, OH⁻ generated at the cathode is transferred to the anode through the electrolyte membrane to produce water, and electricity is thus generated.

The fuel can be appropriately selected from conventionally known fuels, and examples thereof include, but are not limited to, hydrogen, methanol, ethanol, ethylene glycol, formate, hydrazine, sodium borohydride, and ammonia.

The followings are representative examples of the reactions at the respective electrodes when hydrogen, methanol, or formate is used as the fuel.
- Fuel cell with hydrogen
   Anode:

      2OH⁻ + H₂ → 2H₂O
   Cathode:

      O₂ + 2H₂O+4e⁻ → 4OH⁻
- Fuel cell with methanol
   Anode:

      6OH⁻ + CH₃OH → CO₂ + 5H₂O
   Cathode:

      O₂ + 2H₂O + 4e⁻ → 4OH⁻
- Fuel cell with formate
   Anode:

      HCOO⁻ + 3OH⁻ → 2H₂O + CO₃²⁻ + 2e⁻
   Cathode:

      O₂ + 2H₂O + 4e⁻ → 4OH⁻

In a case where the electrolyte polymer is applied to a polymer electrolyte fuel cell, a proton conductive electrolyte membrane is used as the electrolyte membrane. The configuration of the polymer electrolyte fuel cell may be a conventionally known configuration.

For example, a membrane electrode assembly is formed by arranging a cathode on one side of the electrolyte membrane and an anode on the other side thereof; then, oxygen is supplied to the cathode and fuel is supplied to the anode; subsequently, protons generated at the anode is transferred to the anode through the electrolyte membrane to produce water, and electricity is thus generated.

The fuel can be appropriately selected from conventionally known fuels, and specific examples thereof include those exemplified for the above solid alkaline fuel cell.

The followings are representative examples of the reactions at the respective electrodes when hydrogen is used as a fuel.
Anode:

   H₂ → 2H⁺ + 2e⁻
Cathode:

   O₂ + 4H⁺ + 4e⁻ → 2H₂O

### 6. Water electrolysis and electrolysis technique

The electrolyte membrane of the present invention can be suitably used for water electrolysis (apparatus), other electrolysis techniques (electrolysis apparatus), and electrolysis apparatus using these electrolysis methods. The electrolysis apparatus may have, for example, the electrolyte membrane of the present invention, an anode and a cathode in an electrolytic cell, and the target object can be obtained through electrolysis (oxidation-reduction reaction) of a material of interest via the electrolyte membrane of the present invention.

In a case where the electrolyte membrane is applied to a water electrolysis apparatus, a proton-conducting or anion-conducting electrolyte membrane is used as the electrolyte membrane. For example, an anode is arranged on one side of a proton-conducting electrolyte membrane and a cathode is arranged on the other side thereof, and protons generated at the anode are transferred to the cathode through the electrolyte membrane and combined with electrons at the cathode to obtain hydrogen. The formulas of reactions at the respective electrodes are as follows.
Anode:

   2H₂O → O₂ + 4H⁺ + 4e⁻
Cathode:

   2H⁺ + 2e⁻ → H₂

Examples of other electrolysis techniques include an electrolysis technique in which carbon dioxide is electrolyzed to generate formic acid. For example, protons generated at the anode can be transferred to the cathode through the electrolyte membrane and reacted with carbon dioxide supplied to the cathode to obtain formic acid. The formulas of reactions at the respective electrodes are as follows.
Anode:

   2H₂O → O₂ + 4H⁺ + 4e⁻
Cathode:

   CO₂ + 2H⁺ + 2e⁻ → HCOOH

### Examples

Hereinafter, the present invention will now be described more specifically by way of examples and comparative examples. However, these descriptions for examples and comparative examples do not limit the present invention.

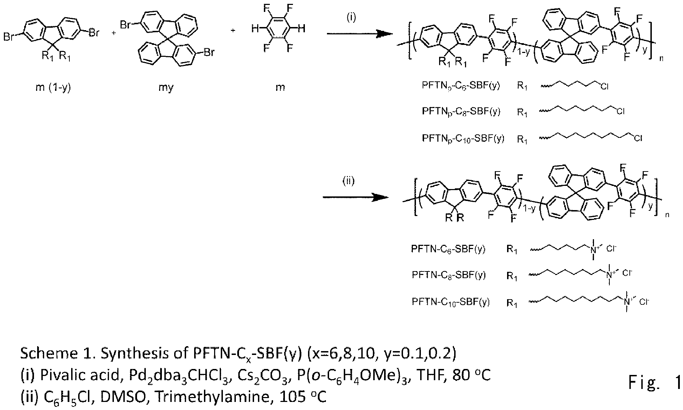

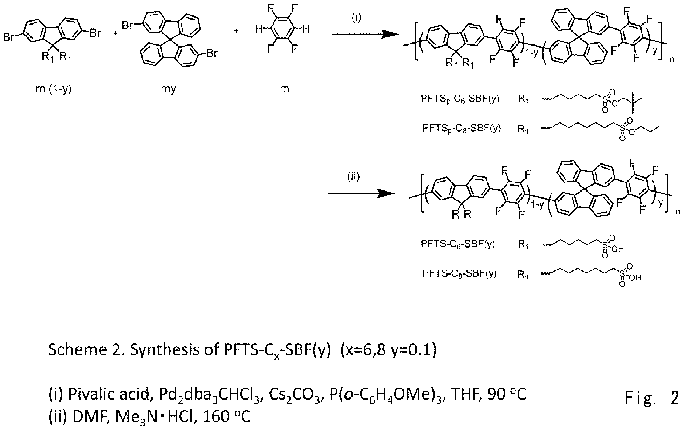

Examples 1 to 6 correspond to (i) in Scheme 1 (Fig. 1), and Examples 7 to 12 include (ii) in Scheme 1. Examples 13 to 14 correspond to (i) of Scheme 2 (Fig. 2), and Examples 15 to 16 include (ii) of Scheme 2.

### [Example 1: Synthesis of PFTNp-C₆-SBF (0.1)]

In a 50-mL two-necked round-bottom flask, 2,7-dibromo-9,9'-bis(6-chlorohexyl)fluorene 1.01 g (1.8 mmol), 2,2'-dibromo-9,9'-spirobifluorene 94.8 mg (0.2 mmol), pivalic acid 204 mg (2.00 mmol), Cs₂CO₃ 1.96 g (6.00 mmol), P(o-C₆H₄-OMe)₃ 14 mg (40 µmol), and Pd₂(dba)₃-CHCl₃ 10.5 mg (10 µmol) were added, followed by addition of 2 mL of dehydrated THF, and purge with N₂ was carry out for 10 minutes. Then, the purge with N₂ was stopped, followed by addition of 309 mg (2.06 mmol) of 1,2,4,5-tetrafluorobenzene dissolved in 1.0 mL of dehydrated THF. After stirring under nitrogen at room temperature for 30 minutes, the reaction was carried out at 80°C for 24 hours. The resulting solid was dissolved in 200 mL of chloroform, followed by washing with 1 M hydrochloric acid and then washing twice with water. After removing the solvent, the residue was dissolved in chloroform, and re-precipitation from methanol was carried out, followed by stirring for a while. After filtration, the filter residue was vacuum-dried at 75°C for 3 hours to give 921 mg of a white solid (PFTNp-C₆-SBF (0.1) below).
Molecular weight (GPC) of PFTNp-C₆-SBF (0.1): Mₙ = 53900, M_{w} = 376000

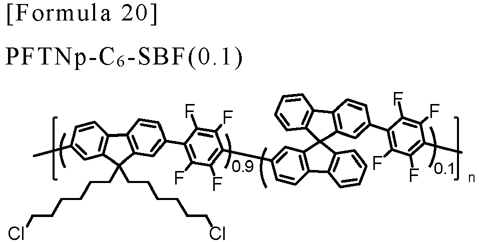

### [Example 2: Synthesis of PFTNp-C₆-SBF (0.2)]

A white solid (PFTNp-C₆-SBF (0.2) below) 906 mg was obtained in the same manner as in Example 1 except that the monomer ratio was changed to 2,7-dibromo-9,9'-bis(6-chlorohexyl)fluorene 898 mg (1.6 mmol) and 2,2'-dibromo-9,9'-spirobifluorene 190 mg (0.4 mmol) in Example 1.
Molecular weight (GPC) of PFTNp-C₆-SBF (0.2): Mₙ = 25100, M_{w} = 190000

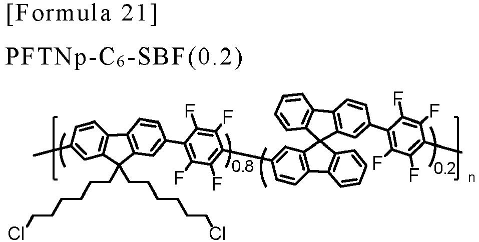

### [Example 3: Synthesis of PFTNp-C₈-SBF (0.1)]

A white solid (PFTNp-C₈-SBF (0.1) below) 1030 mg was obtained in the same manner as in Example 1, except that 2,7-dibromo-9,9'-bis(8-chlorooctyl)fluorene 1111 mg (1.8 mmol) was used instead of 2,7-dibromo-9,9'-bis(6-chlorohexyl)fluorene and the amount of 2,2'-dibromo-9,9'-spirobifluorene was changed to 94.8 mg (0.2 mmol) in Example 1.
Molecular weight (GPC) of PFTNp-C₈-SBF (0.1) : Mₙ = 46600, M_{w} = 339000

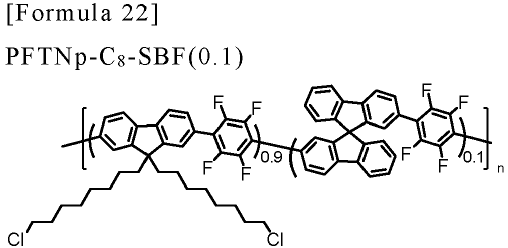

### [Example 4: Synthesis of PFTNp-C₈-SBF (0.2)]

A white solid (PFTNp-C₈-SBF(0.2) below) 998 mg was obtained in the same manner as in Example 3 except that the monomer ratio was changed to 2,7-dibromo-9,9'-bis(8- chlorooctyl)fluorene 987 mg (1.6 mmol) and 2,2'-dibromo-9,9'-spirobifluorene 190 mg (0.4 mmol) in Example 3.
Molecular weight (GPC) of PFTNp-C₈-SBF (0.2): Mₙ = 21800, M_{w} = 116000

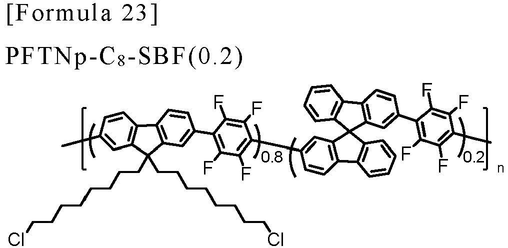

### [Example 5: Synthesis of PFTNp-C₁₀-SBF (0.1)]

A white solid (PFTNp-C₁₀-SBF (0.1) below) 1130 mg was obtained in the same manner as in Example 1, except that 2,7-dibromo-9,9'-bis(10-chlorodecyl)fluorene 1211 mg (1.8 mmol) was used instead of 2,7-dibromo-9,9'-bis(6-chlorohexyl)fluorene and the amount of 2,2'-dibromo-9,9'-spirobifluorene was changed to 94.8 mg (0.2 mmol) in Example 1.
Molecular weight (GPC) of PFTNp-C₁₀-SBF (0.1) : Mₙ = 43000, M_{w} = 355000

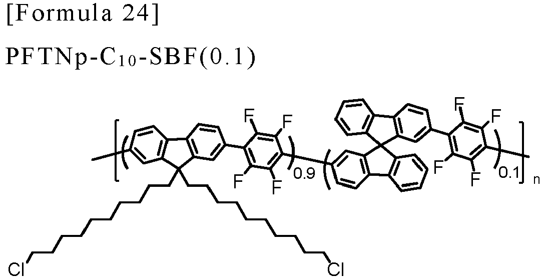

### [Example 6: Synthesis of PFTNp-C₁₀-SBF (0.2)]

A white solid (PFTNp-C₁₀-SBF(0.2) below) 1089 mg was obtained in the same manner as in Example 5 except that the monomer ratio was changed to 2,7-dibromo-9,9'-bis(10-chlorodecyl)fluorene 1077 mg (1.6 mmol) and 2,2'-dibromo-9,9'-spirobifluorene190 mg (0.4 mmol) in Example 5.
Molecular weight (GPC) of PFTNp-C₁₀-SBF (0.2): Mₙ = 25400, M_{w} = 252000

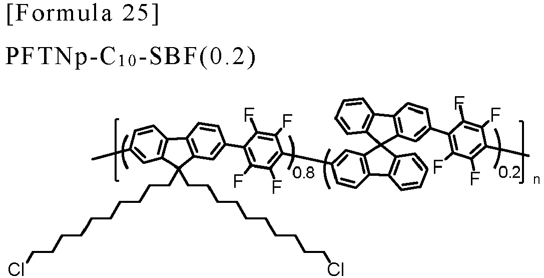

### [Example 7: Production of membrane containing PFTN-C₆-SBF (0.1)]

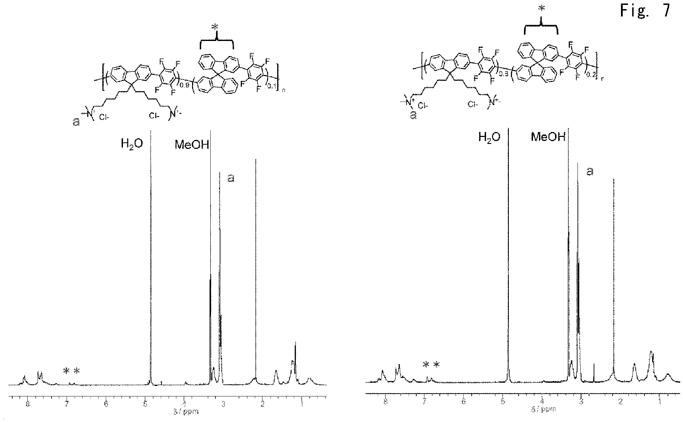

Chlorobenzene 30 ml was added to PFTNp-C₆-SBF (0.1) 600 mg of Example 1, followed by filtration to remove insoluble components. The resulting filtrate was transferred to a 50-mL sample tube, and 2 mL of a trimethylamine solution in methanol (3.2 mol/l) was added thereto, followed by stirring at 105°C in a closed system for 10 hours. After cooling to room temperature, dimethyl sulfoxide 20 mL and a trimethylamine methanol solution 1 mL (3.2 mol/l) were added, and the mixture was stirred at 105°C for 8 hours. After cooling to room temperature, chlorobenzene and trimethylamine were removed by an evaporator. Then, dimethyl sulfoxide 20 mL and a trimethylamine solution in methanol 1 mL (3.2 mol/l) were added to the residue, and the mixture was stirred at 105°C for 8 hours. After cooling to room temperature, dimethyl sulfoxide and trimethylamine were removed by an evaporator, and the residue was dried. The resulting solid was immersed in hot water at 80°C for 30 minutes to wash the solid. After washing three times, the solid was recovered by filtration and vacuum-dried at 70°C for 3 hours to give 601 mg of a polymer membrane. Subsequently, the resulting membrane was immersed in a 1 M NaOH aqueous solution at room temperature for 24 hours and washed with pure water for ion exchange, thereby obtaining a membrane containing PFTN-C₆-SBF (0.1) shown below. The ¹H-NMR spectrum of PFTN-C₆-SBF(0.1) is shown in Fig. 7.

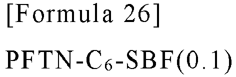

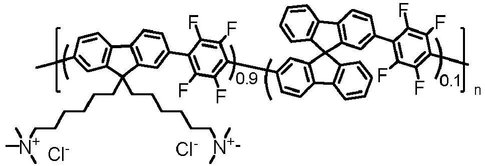

### [Example 8: Production of membrane containing PFTN-C₆-SBF (0.2)]

601 mg of a membrane containing PFTN-C₆-SBF(0.2) shown below was obtained in the same manner as in Example 7 except for using PFTNp-C₆-SBF (0.2) of Example 2 instead of PFTNp-C₆-SBF (0.1) in Example 7. The ¹H-NMR spectrum of PFTN-C₆-SBF(0.2) is shown in Fig. 7.

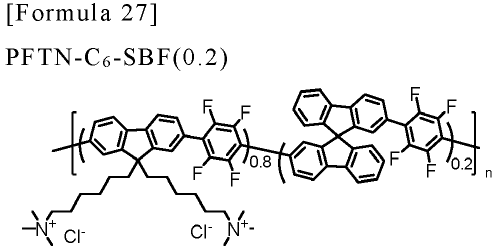

### [Example 9: Production of membrane containing PFTN-C₈-SBF (0.1)]

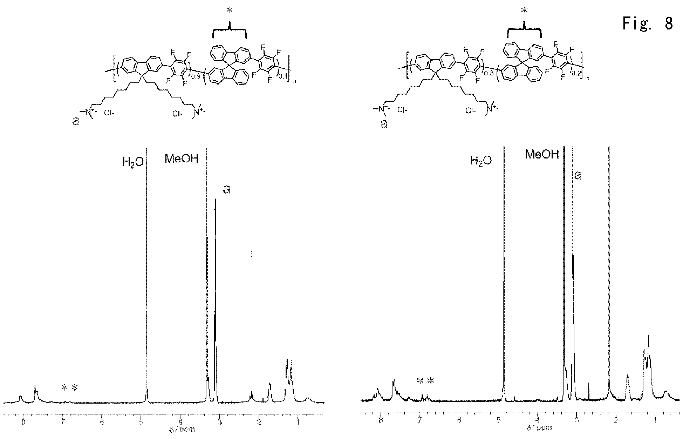

572 mg of a membrane containing PFTN-C₈-SBF(0.1) shown below was obtained in the same manner as in Example 7 except for using PFTNp-Cs-SBF(0.1) of Example 3 instead of PFTNp-C₆-SBF(0.1) in Example 7. The ¹H-NMR spectrum of PFTN-C₈-SBF(0.1) is shown in Fig. 8.

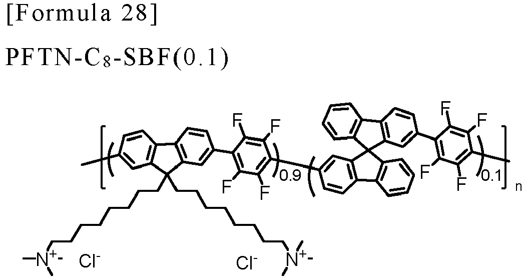

### [Example 10: Production of membrane containing PFTN-C₈-SBF (0.2)]

562 mg membrane containing PFTN-C₈-SBF(0.2) shown below was obtained in the same manner as in Example 7 except for using PFTNp-Cs-SBF(0.2) of Example 4 instead of PFTNp-C₆-SBF(0.1) in Example 7. The ¹H-NMR spectrum of PFTN-C₈-SBF(0.2) is shown in Fig. 8.

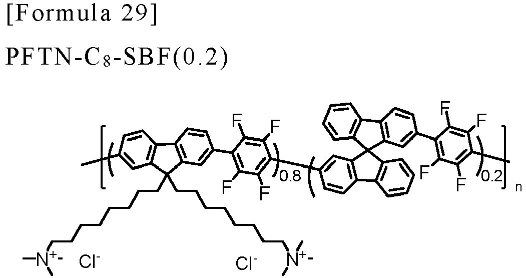

### [Example 11: Production of membrane containing PFTN-C₁₀-SBF (0.1)]

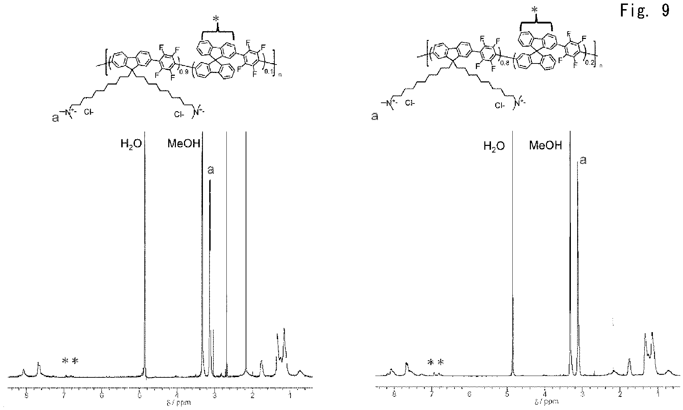

567 mg of a membrane containing PFTN-C₁₀-SBF(0.1) shown below was obtained in the same manner as in Example 7 except for using PFTNp-C₁₀-SBF(0.1) of Example 5 instead of PFTNp-C₆-SBF(0.1) in Example 7. The ¹H-NMR spectrum of PFTN-C₁₀-SBF(0.1) is shown in Fig. 9.

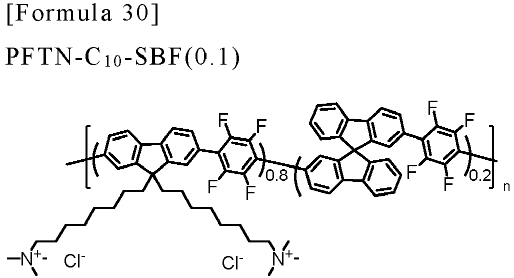

### [Example 12: Production of membrane containing PFTN-C₁₀-SBF (0.2)]

552 mg membrane containing PFTN-C₁₀-SBF(0.2) shown below was obtained in the same manner as in Example 7 except for using PFTNp-C₁₀-SBF(0.2) of Example 6 instead of PFTNp-C₆-SBF(0.1) in Example 7. The ¹H-NMR spectrum of PFTN-C₁₀-SBF(0.2) is shown in Fig. 9.

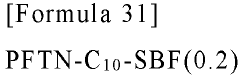

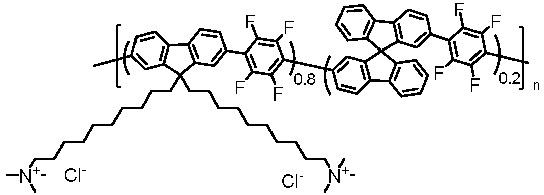

### [Example 13: Synthesis of PFTSp-C₆-SBF (0.1)]

In a 50-mL two-necked round-bottom flask, 2,7-dibromo-9,9'-[6-(sulfonic acid 2,2-dimethylpropyl ester)hexyl]fluorene 1.43 g (1.8 mmol), 2,2'-dibromo-9,9'- spirobifluorene 94.8 mg (0.2 mmol), pivalic acid 204 mg (2.00 mmol), Cs₂CO₃ 1.96 g (6.00 mmol), P(o-C₆H₄-OMe)₃ 14 mg (40 µmol), and Pd₂(dba)₃-CHCl₃ 10.5 mg (10 µmol) were added, followed by addition of 2 mL of dehydrated THF, and purge with N₂ was carried out for 10 minutes. Then, the purge with N₂ was stopped, followed by addition of 309 mg (2.06 mmol) of 1,2,4,5-tetrafluorobenzene dissolved in 1.0 mL of dehydrated THF. After stirring under nitrogen at room temperature for 30 minutes, the reaction was carried out at 90°C until the solvent disappeared to result in the stop of the rotating of the stirrer. The resulting solid was dissolved in 90 mL chloroform, followed by washing with 1 M hydrochloric acid and then washing twice with water. After removing the solvent, the residue was dissolved in chloroform, and re-precipitation from methanol was carried out, followed by stirring for a while. After filtration, the filter residue was dissolved in chloroform, and re-precipitation from hexane was carried out, followed by vacuum-drying at 75°C overnight to give 715 mg of a black solid (PFTSp-C₆-SBF(0.1) below).
Molecular weight (GPC) of PFTSp-C₆-SBF (0.1): Mₙ = 5.3 × 10⁴, M_{w} = 25 × 10⁴

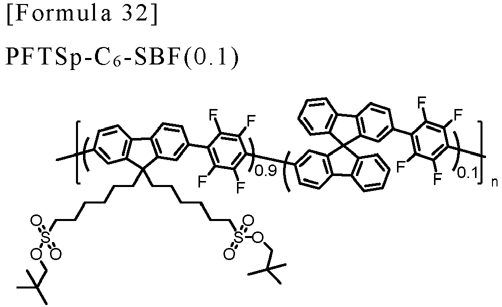

### [Example 14: Synthesis of PFTSp-C₈-SBF (0.1)]

A white solid (PFTSp-C₈-SBF(0.1)) 780 mg was obtained in the same manner as in Example 13 except for using 1.53 g (1.8 mmol) of 2,7-dibromo-9,9'-[8-(sulfonic acid 2,2-dimethylpropyl ester)octyl]fluorene instead of 2,7-dibromo-9,9'-[6-(sulfonic acid 2,2-dimethylpropyl ester)hexyl]fluorene in Example 13.
Molecular weight (GPC) of PFTSp-C₈-SBF (0.1): Mₙ = 3.1 × 10⁴, M_{w} = 15 × 10⁴,

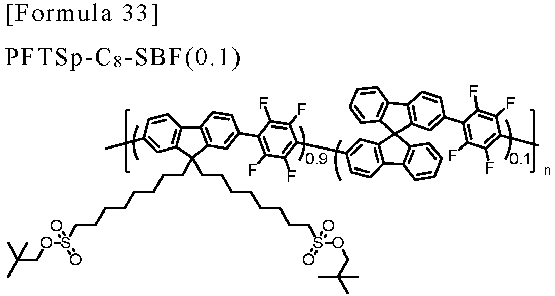

### [Example 15: Production of membrane containing PFTS-C₆-SBF (0.1)]

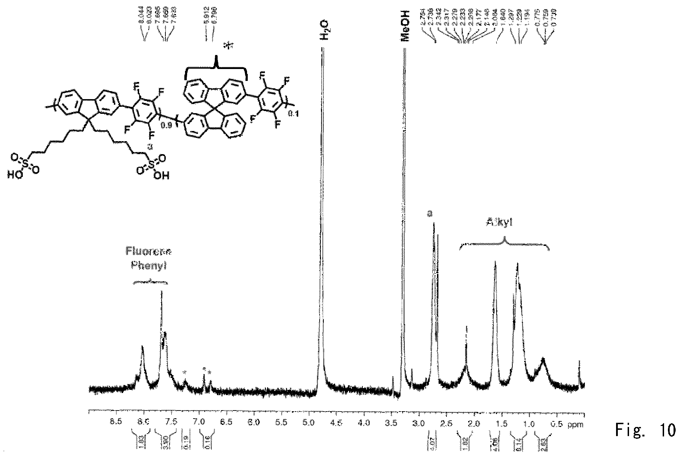

In a 100-mL two-necked Nass flask, PFTSp-C₆-SBF(0.1) 600 mg of Example 13, DMF 80 mL, and MesN-HCl 2.16 mg were added, followed by reflux at 160°C under nitrogen for two days. The solvent was removed by a rotary evaporator. Then, a solid was recovered by suction filtration and vacuum-dried at 75°C overnight. To the resulting solid, 1 M hydrochloric acid was added, and the mixture was stirred at 80°C for one hour. After recovering the polymer by suction filtration, water was added thereto, and the polymer was washed at 80°C for one hour. During this one hour period, the water was changed until the water became neutral on pH test paper. The polymer was then recovered by suction filtration and vacuum-dried at 75°C overnight to give 350 mg of a membranous solid containing PFTS-C₆-SBF (0.1) below. The ¹H-NMR spectrum of PFTS-C₆-SBF(0.1) is shown in Fig. 10.

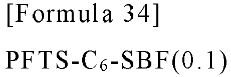

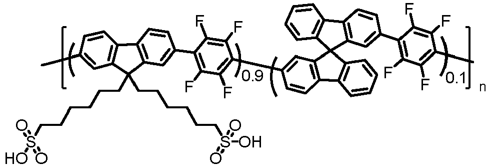

### [Example 16: Production of membrane containing PFTS-C₈-SBF (0.1)]

A 371 mg membranous solid containing PFTS-C₈-SBF(0.1) below was obtained in the same manner as in Example 15 except for using 600 mg of PFTSp-C₈-SBF(0.1) of Example 14 instead of PFTSp-C₆-SBF(0.1) in Example 15. The ¹H-NMR spectrum of PFTS-C₈-SBF(0.1) is shown in Fig. 10.

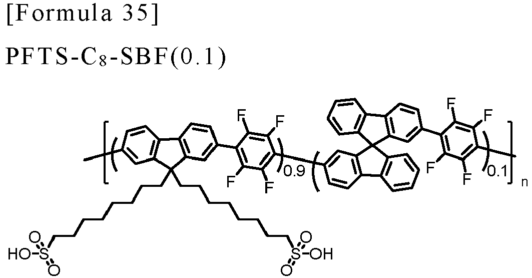

### [Comparative Examples 1 to 7]

The following polymers were provided as Comparative Examples 1 to 7. The polymers of Comparative Examples 1 to 5 are obtained by carrying out the reaction in Scheme 1 or 2 without the addition of 2,2'-dibromo-9,9'-spirobifluorene. 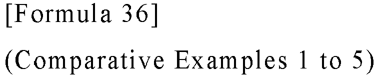 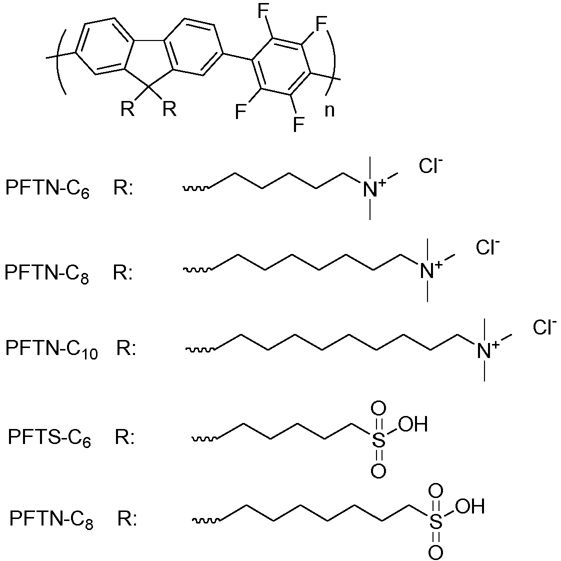 Here, "R" is each shown in the above formula, and Rs from PFTN-C₆ to PFTN-Cs are for the polymers of Comparative Examples 1 to 5 in that order. "n" indicates the number of repeating units.

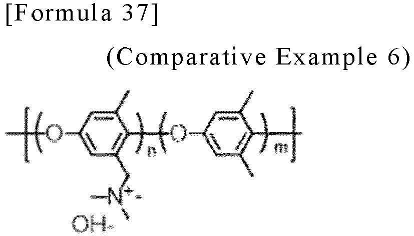

Here, "n" and "m" indicate the numbers of repeating units.

### (Comparative Example 7) Nafion 211 (manufactured by Sigma-Aldrich)

### <Evaluation>

### (Measurement of mechanical strength of membrane)

The membranes containing PFTN-Cx-SBF(y) obtained in Examples 7 to 12 were immersed in a 1 M NaOH aqueous solution for 24 hours as a pretreatment, and then washed with pure water for 1 hour for three times to perform ion exchange to OH⁻.

The membranes containing PFTS-Cx-SBF(y) obtained in Examples 15 and 16 were acid-treated in advance.

A JIS K6251 7-type sample was prepared from each of the above pretreated membranes, and subjected to a tensile test at 23°C in the atmosphere using a measuring instrument (digital material tester Instron 5985). The tensile speed in the test was 100 mm/min., and the distance between chucks was 20 mm.

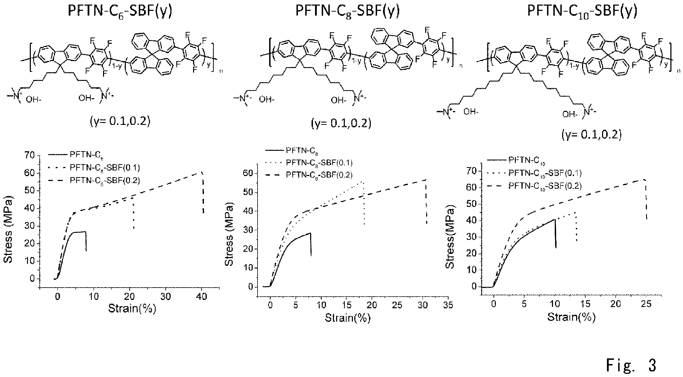

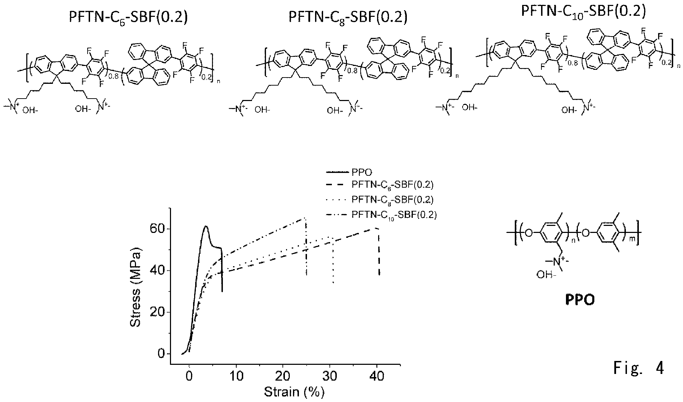

As comparative examples, the same measurements were performed on the polymer membranes of Comparative Examples 1, 2, 3, and 6 above. The results are shown in Figs. 3 and 4.

### (Measurement of gas permeability of membrane)

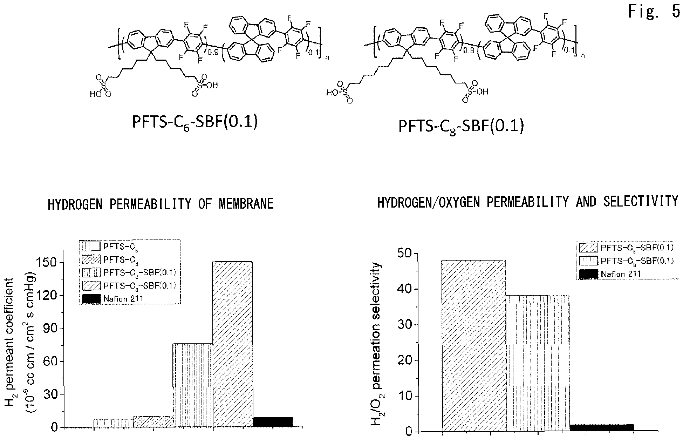

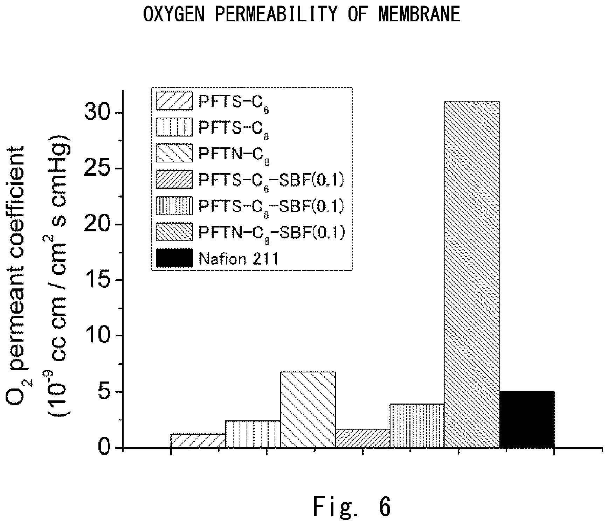

The measurement of gas (hydrogen and oxygen) permeability according to the JIS-K7126-2 standard was performed on membrane samples (permeation area: 0.785 cm², membrane thickness: 10 µm to 40 µm). The samples were obtained by subjecting the membranes obtained in Examples 7 to 12 and Examples 15 to 16 to humidification on both sides under conditions of relative humidity of 90% at 80°C. As comparative examples, the same measurement was performed on the polymer membranes of Comparative Examples 2, 4, 5, and 7 above. The hydrogen/oxygen selective permeability (hydrogen permeability/oxygen permeability) was also calculated. The results are shown in Figs. 5 and 6.

### <Summary of results>

As shown in Tables 3 and 4, it was found that the membranes containing the polymers according to the present invention were polymers with high mechanical strength, high elongation, and excellent flexibility.

Further, as shown in Figs. 5 and 6, it was found that the membranes containing the polymers according to the present invention had excellent hydrogen permeability, and that their oxygen permeabilities can be adjusted by their substituents of the polymer, and the like. For example, it was shown that a separation membrane with high hydrogen/oxygen selective permeability can be produced.

This application claims priority to Japanese Patent Application No. 2021-35443 filed on March 5, 2021, the entire disclosure of which is incorporated by reference herein in its entirety.

## Claims

1. A polymer comprising a repeating unit represented by the following Formula (1) and a repeating unit represented by the following Formula (2): 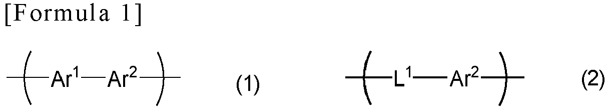 wherein
Ar¹ is a group containing an aromatic ring,
Ar² is each independently a group having a structure represented by the following Formula (3) at both ends, and
L¹ is an organic group wherein an angle formed between two bonding hands of the L¹ is 45 to 90 degrees, and wherein
when there is more than one Ar¹, Ar² or L¹, the more than one Ar¹, Ar² or L¹ may be the same or different from each other.

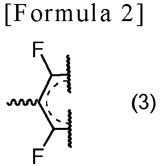

2. The polymer according to claim 1, wherein the L¹ is a group represented by any of the following Formulas (L1) to (L3): 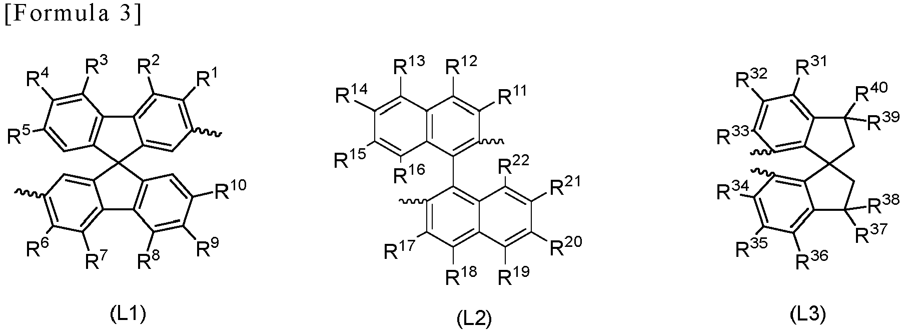 wherein
R¹ to R¹⁰ are each independently a hydrogen atom, a C1-6 alkyl group optionally having a substituent, a phenyl group optionally having a substituent, or R¹ and R², R² and R³, R³ and R⁴, R⁴ and R⁵, R⁶ and R⁷, R⁷ and R⁸, R⁸ and R⁹, or R⁹ and R¹⁰ are optionally linked to form a ring structure;
R¹¹ to R²² are each independently a hydrogen atom, a C1-6 alkyl group optionally having a substituent, a phenyl group optionally having a substituent, or R¹¹ and R¹², R¹² and R¹³, R¹³ and R¹⁴, R¹⁴ and R¹⁵, R¹⁵ and R¹⁶, R¹⁷ and R¹⁸, R¹⁸ and R¹⁹, R¹⁹ and R²⁰, R²⁰ and R²¹, or R²¹ and R²² are optionally linked to form a ring structure; and
R³¹ to R⁴⁰ are each independently a hydrogen atom, a C1-6 alkyl group optionally having a substituent, a phenyl group optionally having a substituent, or R³¹ and R³², R³² and R³³, R³⁴ and R³⁵, R³⁵ and R³⁶, R³⁶ and R³⁷, or R⁴⁰ and R³¹ are optionally linked to form a ring structure.

3. The polymer according to claim 1 or 2, wherein the Ar² is a group represented by any of the following Formulas (b-1) to (b-9): 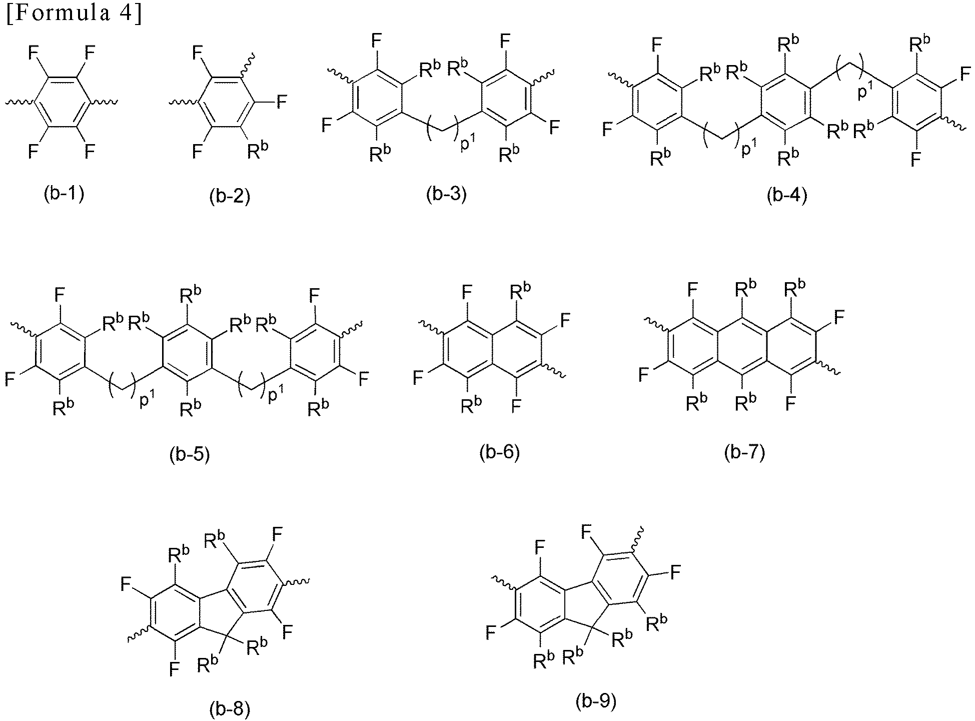 wherein
R^{b} is each independently a hydrogen atom, a halogen atom, or an organic group; p¹ is each independently an integer of 0 to 12; and when there is more than one R^{b} or p¹, the more than one R^{b} or p¹ may be the same or different from each other.

4. The polymer according to any one of claims 1 to 3, wherein the Ar² is a group represented by any of the following Formulas (b-10) to (b-14):

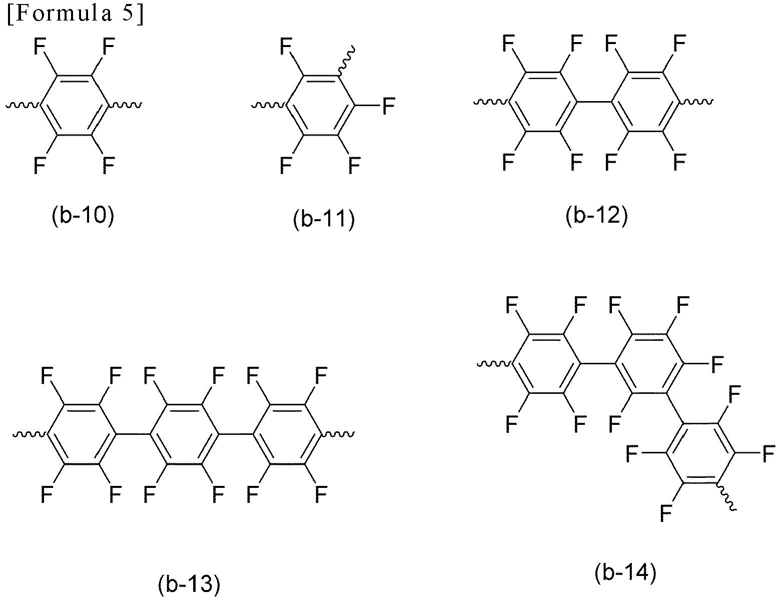

5. The polymer according to any one of claims 1 to 4, wherein the Ar¹ is a group represented by any of the following Formulas (a-1) to (a-9): 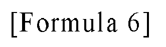 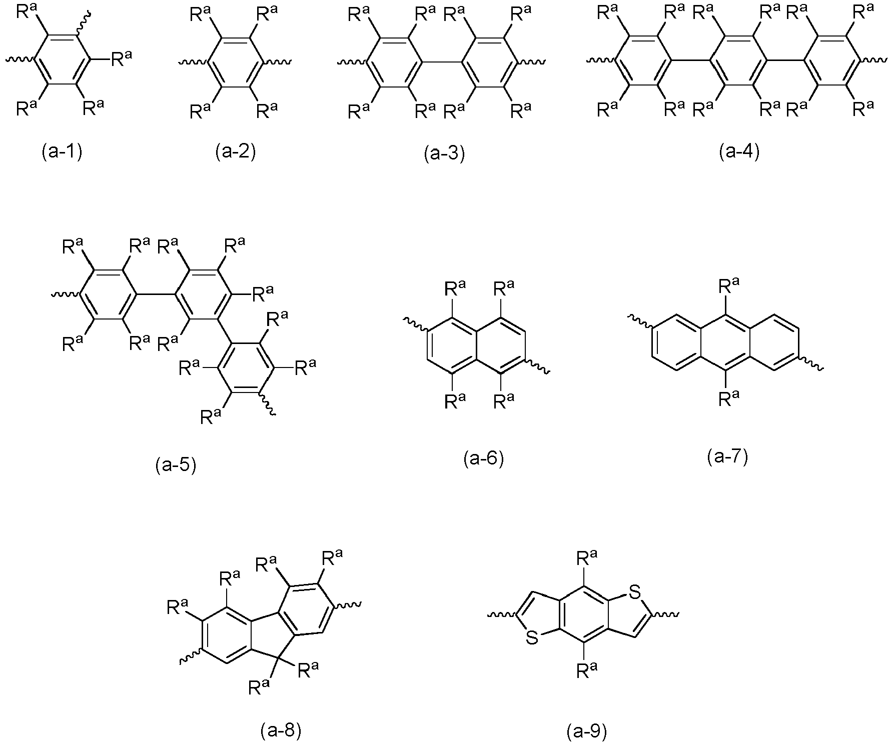 wherein
R^{a} is each independently a hydrogen atom or a hydrocarbon group optionally having a substituent, and the more than one R^{a} may be the same or different from each other.

6. The polymer according to any one of claims 1 to 5, wherein a molar ratio between the repeating unit represented by the Formula (1) and the repeating unit represented by the Formula (2) is 95 : 5 to 50 : 50.

7. The polymer according to any one of claims 1 to 6, wherein the Ar¹ has an ion exchange group.

8. The polymer according to claim 7, wherein the ion exchange group is a sulfonic acid group, phosphoric acid group, carboxylic acid group, quaternary ammonium group, or imidazolium group.

9. A method for producing the polymer according to any one of claims 1 to 8, comprising the step of
reacting a compound represented by the following Formula (5), a compound represented by the following Formula (6), and a compound represented by the following Formula (7):
[Formula 7]
X¹-Ar¹-X¹ (5)
X¹-L¹-X¹ (6)
H-Ar²-H (7)
wherein
Ar¹ is a group containing an aromatic ring,
Ar² is a group having a structure represented by the following Formula (3) at both ends,
L¹ is an organic group wherein an angle formed between two bonding hands of the L¹ is 45 to 90 degrees, and
X¹ is each independently Br or I, and more than one X¹ may be the same or different from each other.

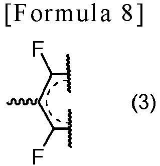

10. A separation membrane comprising the polymer according to any one of claims 1 to 8.

11. An electrolyte membrane comprising the polymer according to claim 7 or 8.

12. A fuel cell comprising the electrolyte membrane according to claim 11.

13. Water electrolysis comprising using the electrolyte membrane according to claim 11.

14. An electrolysis technique comprising using the electrolyte membrane according to claim 11.
